# FASCICULE DE BREVET EUROPEEN

(11) **EP 0 349 404 B1**
(45) Date de publication et mention de la délivrance du brevet: **28.04.1993**
(21) Numéro de dépôt: 89401805.0
(22) Date de dépôt: 26.06.1989
(51) Int. Cl.: G09F 9/35

(54) **Dispositif d'affichage géant à cristaux liquides**
Riesige Flüssigkristallanzeigevorrichtung
Gigantic liquid crystal display

(30) Priorité: 28.06.1988 FR 8808663
(43) Date de publication de la demande: 03.01.1990
(73) Titulaire: FRANCE TELECOM, 75015 Paris (FR)
(72) Inventeur: Morin, François, F-22300 Lannion (FR)
(74) Mandataire: Mongrédien, André

(56) Documents cités:
- WO-A-85/05192
- DE-A- 2 555 859
- DE-A- 3 142 664
- GB-A- 2 024 487
- US-A- 3 750 136
- FUNKSCHAU, vol. 59, no. 17, 14 août 1987, pages 42-46, Munich, DE; H. MARTINI: "HDTV mit Lichtventil"
- PATENT ABSTRACTS OF JAPAN, vol. 9, no. 116 (P-357)[1839], 21 mai 1985, page 40 P 357; & JP-A-60 2916 (SUWA SEIKOSHA K.K.) 09-01-1985

## Description

La présente invention a pour objet un dispositif d'affichage géant à cristaux liquides. Elle trouve une application dans l'affichage d'images de très grandes dimensions (plusieurs mètres carrés), images généralement de type vidéo en couleur. A fortiori, peut-on utiliser l'invention dans des domaines moins contraignants : affichage alphanumérique, images fixes ou lentement variables, monochromatiques, etc.).

On peut réaliser des dispositifs d'affichage géants soit à partir de tubes cathodiques, soit à l'aide d'afficheur à cristaux liquides.

Dans la première famille, il faut mentionner d'abord le projecteur de type Eïdophore, dont le coeur est un tube à film d'huile déformé localement par un faisceau d'électrons. Ce film d'huile, grâce à sa biréfringérence variable, provoque une variation de contraste dans le faisceau optique de projection. L'Eïdophore est le seul système permettant la projection vidéo sur très grand écran.

Plus répandus sont les projecteurs vidéo tri-tubes dans lesquels on projette, sur un écran de l'ordre du mètre carré, les images rouge, verte et bleue de trois tubes cathodiques très brillants.

Dans le même ordre d'idées, les panneaux modulaires à tubes à rayons cathodiques deviennent très utilisés dans le domaine de l'affichage publicitaire et commercial.

Dans la famille des projecteurs à afficheurs à cristaux liquides, on connaît un système à trois afficheurs éclairés en rouge, vert et bleu respectivement, et comportant des miroirs dichroïques avec une lentille de projection.

Enfin, certaines firmes proposent des panneaux modulaires à cristaux liquides couleur.

Le document US-A- 3 750 136 divulgue un projecteur à afficheur à cristaux liquides.

Ces divers dispositifs présentent tous des inconvénients.

Les assemblages de tubes à rayons cathodiques ou d'afficheurs à cristaux liquides ont l'inconvénient de présenter un effet de "grille noire" dû à la jonction des divers modules. Ils ne sont pas adaptés à un affichage de qualité.

En outre, les modules à afficheur à cristaux liquides présentent une hétérogénéité de coloration due à l'utilisation de filtres mosaïques colorés multiples (un par écran). L'oeil étant très sensible aux variations de couleur, l'observateur distingue en général très nettement les variations de coloration d'un module à l'autre, lors de l'affichage de plages isochromes.

Enfin, dans les afficheurs à cristaux liquides en couleur, qui sont utilisés dans ces modules, les filtres colorés sont situés à l'intérieur de la cellule pour éviter les effets de parallaxe ; en conséquence, ils s'échauffent sous fort flux lumineux, ce qui provoque une détérioration du contraste de l'afficheur.

Dans les systèmes à projection utilisant trois afficheurs à cristaux liquides dédiés chacun à une couleur, cet inconvénient n'existe pas car le filtre monochrome est, cette fois, à l'extérieur de la cellule à cristaux liquides. Cependant, ce système est pénalisé par l'emploi de filtres dichroïques coûteux et l'obtention d'un rendement médiocre.

Enfin, les projecteurs tri-tubes à rayons cathodiquesm ne sont adaptés qu'aux surfaces moyennes (de l'ordre du mètre carré) et sont de qualité médiocre du fait de la non-fixité spatiale de l'image du tube. La superposition des trois couleurs est généralement imparfaite.

Seul le système Eïdophore est aujourd'hui adapté aux très grandes surfaces d'affichage. Mais il est très coûteux et nécessite une cabine de projection spécialisée.

La présente invention a justement pour but de remédier à ces inconvénients.

A cette fin, elle préconise le dispositif défini dans la revendication 1

Bien que l'invention couvre le cas où l'on n'utiliserait qu'un seul module de projection, on préfère juxtaposer une pluralité de modules rangés en lignes et colonnes, les images correspondant à ces divers modules étant juxtaposées sur l'écran pour former une image unique.

De préférence, l'afficheur à cristaux liquides est du type à matrice active ; il est par exemple à transistors en couches minces.

Dans le dispositif de l'invention, les afficheurs à cristaux liquides sont donc monochromes, ce qui évite la présence de filtres colorés à l'intérieur de l'afficheur et, par conséquent le risque de leur échauffement et leur dégradation. Les filtres colorés sont sur l'écran d'observation. Leur réalisation s'en trouve facilitée : disparition des contraintes liées à la compatibilité avec les cristaux liquides, et possibilité de dimensions plus grandes (éléments colorés de l'ordre du millimètre carré sur l'écran de projection) autorisant la réalisation par imprimerie.

Les images projetées peuvent être raccordées au pixel près, grâce à un montage mécanique ajustable des modules de projection : les raccords entre les images modulaires projetées sont alors invisibles.

Enfin, le système de projection par l'arrière conduit à la conception d'écrans autonomes qui, grâce à un jeu de miroirs, peuvent être d'épaisseur faible, donc peu encombrants.

De toute façon, les caractéristiques de l'invention apparaîtront mieux à la lumière de la description qui suit. Cette description porte sur des exemples de réalisation de l'invention et se réfère à des dessins annexés sur lesquels :
- la figure 1 montre une vue schématique en perspective d'un dispositif selon l'invention,
- la figure 2 montre une vue de côté d'un dispositif selon l'invention,
- la figure 3 montre la structure d'un module de projection,
- la figure 4 montre la face arrière de l'écran de projection.

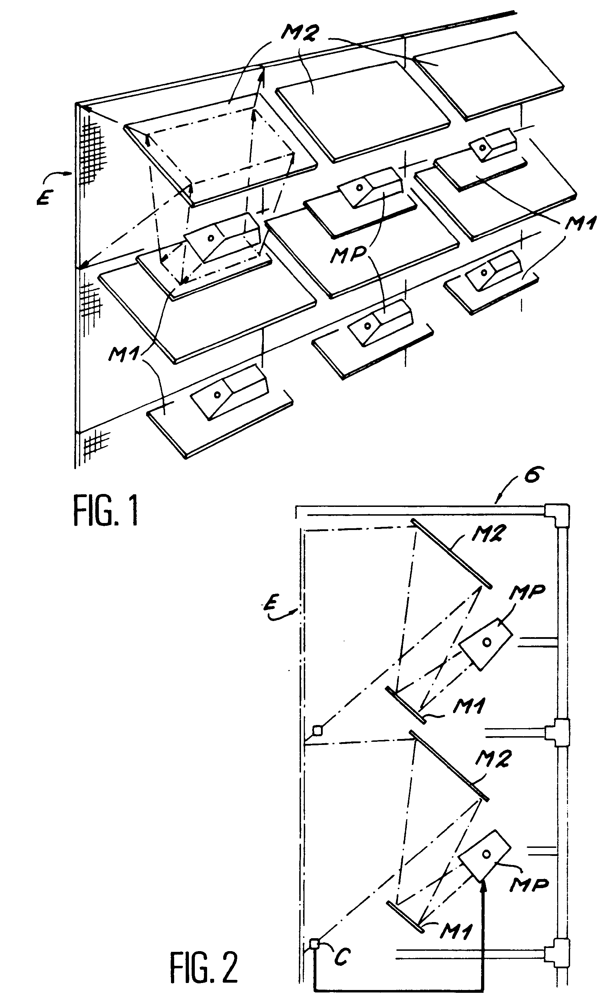

On voit sur les figures 1 et 2 un dispositif d'affichage géant selon l'invention. Ce dispositif comprend un écran E de très grandes dimensions, deux rangées de trois modules de projection MP, chacun associé à un premier miroir M1 et à un second miroir M2. L'ensemble est porté par un châssis 6 qui comprend des moyens de réglage non représentés pour l'ajustage initial des différents modules par rapport à l'écran.

Eventuellement, une cellule photosensible C (cf Fig. 2) mesure l'intensité lumineuse émise par chaque module et commande en conséquence le module correspondant pour obtenir l'intensité appropriée.

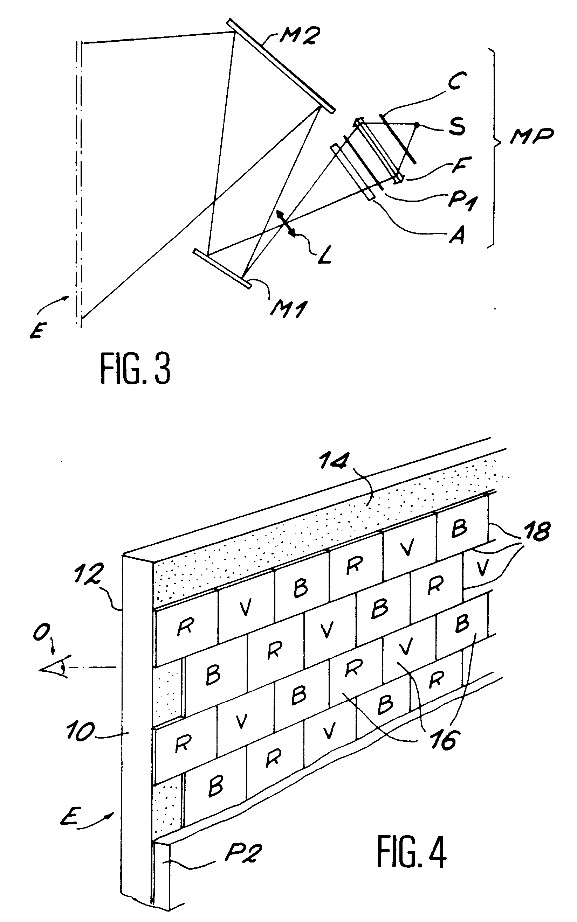

La figure 3 illustre plus en détail la structure d'un module de projection. On y voit une source de lumière blanche S (lampe halogène ou à iodures métalliques), un condenseur asphérique C, une double lentille de Fresnel F, un premier polariseur P1, un afficheur à cristaux liquides A et une lentille de projection L. L'afficheur est situé dans le plan focal objet de cette lentille, l'écran E étant situé dans le plan image. Le second polariseur P2 est supposé être plaqué contre l'écran (cf Fig. 4).

L'ensemble lampe-condenseur-double lentille de Fresnel a pour fonction d'éclairer l'afficheur A sous un angle obtus, afin que toute la lumière le traversant converge au centre de la lentille de projection L. On optimise ainsi le rendement lumineux. La lentille de projection L a une ouverture suffisante pour éviter toute aberration chromatique.

L'afficheur à cristaux liquides est de préférence du type à matrice active et à transistors à couches minces (TFT). Un procédé simple de réalisation d'un tel afficheur, ne nécessitant que deux niveaux de masquage et gravure, est décrit dans le document de brevet français FR-A-2 533 072.

Un tel afficheur conduit à un fort contraste, permet l'obtention de niveaux de gris et s'accommode d'une cadence compatible avec des signaux de télévision.

Quant à l'écran, il peut être conforme à la figure 4. Il est situé au plan image de la lentille de projection et est constitué d'un supoprt transparent 10 (verre ou polycarbonate) ayant une face avant 12 dirigée vers l'observateur 0 et une face arrière 14. Cette dernière face est légèrement dépolie, afin de diffuser la lumière dans un angle de vision confortable (gain de l'écran inférieur à 6). Sur la face arrière 14 sont déposées des mosaïques de filtres colorés 16 dans trois couleurs primaires, R, V, B (rouge, vert, bleu par exemple), soit par un procédé d'impression direct ("offset" ou sérigraphie), soit par collage d'un film photographique couleur. Pour optimiser le contraste (qualité du noir) on peut réaliser, en plus des filtres colorés, une grille noire 18 de séparation entre les filtres (dite "Black Matrix").

On peut aussi coller sur l'écran d'observation l'un des deux polariseurs P2, nécessaires au fonctionnement des afficheurs à cristaux liquides. Il sert alors en plus de protection des filtres colorés.

La répartition des pixels de l'afficheur à cristaux liquides est exactement celle des filtres colorés élementaires de l'écran. Dans le cas illustré, cette répartition est "triangulaire", ou si l'on veut, en quinconce. Les lignes d'adressage restent horizontales, comme d'ordinaire mais les colonnes d'adressage présentent des décrochements. Ainsi, chaque pixel de l'afficheur est projeté exactement sur l'un des filtres colorés de l'écran. Chaque afficheur est commandé pour que l'image projetée, qui n'est modulée qu'en intensité, fasse apparaître l'image souhaitée en couleur.

A titre purement explicatif, on peut réaliser des afficheurs à cristaux liquides de 7 cm x 9 cm avec un pas de 250µm ; on peut utiliser un grandissement de 10, ce qui conduit à des images modulaires de 70 x 90 cm ; l'écran peut comprendre des filtres répartis au pas de 2,5 mm et présenter des dimensions de 1,4 m x 2,7 m ; il existe ainsi deux rangées de trois images modulaires ; une telle image comprend donc 560 lignes de 360 triades, soit 560 x 1080 pixels.

## Revendications

1. Dispositif d'affichage géant comprenant un écran (E) de grandes dimensions et au moins un module de projection (MP) utilisant un afficheur à cristaux liquides, le susdit module de projection (MP) comprenant une source de lumière blanche (S), un afficheur à cristaux liquides monochrome (A) intercalé entre la source (S) et la face arrière (14) de l'écran (E), et des moyens optiques appropriés (L, C, F, P1, L') à la projection de l'image de l'afficheur (A) sur la face arrière (14) de l'écran (E), chaque afficheur étant constitué de pixels,
caractérisé en ce que
l'écran (E) est translucide et comprend une face avant (12) dirigée vers l'observateur (0) et une face arrière (14) comprenant une mosaïque de filtres colorés (16) organisés en triades de couleurs primaires (R, V, B), chaque pixel se projetant sur l'un des divers filtres colorés supportés par l'écran.

2. Dispositif selon la revendication 1, caractérisé par le fait qu'il comprend divers modules de projection (MP) juxtaposés en lignes et colonnes, les images correspondant à ces divers modules étant projetées sur l'écran (E) et étant juxtaposées pour former une image unique.

3. Dispositif selon la revendication 1, caractérisé par le fait que l'écran (E) est constitué d'un support transparent (10) dont la face arrière (14) est dépolie.

4. Dispositif selon la revendication 1, caractérisé par le fait que l'écran (E) comprend, sur sa face arrière (14) une grille noire (18) de séparation entre les filtres colorés (16).

5. Dispositif selon la revendication 1, caractérisé par le fait que l'afficheur à cristaux liquides (A) est du type à matrice active.

6. Dispositif selon la revendication 5, caractérisé par le fait que l'afficheur (A) à matrice active est du type à transistors en couches minces.

7. Dispositif selon la revendication 1, caractérisé par le fait que les filtres colorés (16) de l'écran (E) sont répartis en triangles (R, V, B) et que l'afficheur à cristaux liquides (A) comprend des pixels organisés eux aussi en triangles.

8. Dispositif selon la revendication 1, caractérisé par le fait que chaque module de projection (MP) comprend, devant la source lumineuse (S), successivement un condenseur (C), une double lentille de Fresnel (L), un premier polariseur (P1), une lentille de projection (L') avec un plan focal objet où est placé l'afficheur à cristaux liquides (A), un premier miroir de renvoi (M1), un second miroir de renvoi (M2) et un second polariseur (P2), l'écran (E) étant placé dans le plan image de la lentille de projection (L').

9. Dispositif selon la revendication 8, caractérisé par le fait que le second polariseur (P2) est placé contre la face arrière (14) de l'écran (E).

10. Dispositif selon la revendication 1, caractérisé par le fait qu'il comprend en outre un moyen de contrôle (C) de l'intensité lumineuse projetée par chaque module de projection (MP) et un moyen pour commander en retour cette intensité à une valeur appropriée.

## Patentansprüche

1. Großanzeigevorrichtung, die einen Bildschirm mit großen Abmessungen enthält und wenigstens einen Projektionsmodul (MP) unter Verwendung einer Flüssigkristallanzeige, wobei der obengenannte Projektionsmodul (MP) eine Quelle für weißes Licht (S), eine monochrome Flüssigkristallanzeige (A), angebracht zwischen der Quelle (S) und der Rückseite (14) des Bildschirms (E), und geeignete optische Mittel (L, C, F, P1, L') für die Projektion des Bildes der Anzeige (A) auf die Rückseite (14) des Bildschirms (E) enthält, wobei jede Anzeige sich zusammensetzt aus Pixeln,
dadurch **gekennzeichnet**,
daß der Bildschirm (E) lichtdurchlässig ist und eine gegen den Betrachter (O) gerichtete Vorderseite aufweist und eine Rückseite (14), die ein Mosaik aus Farbenfiltern (16) enthält, die in Dreiergruppen mit den Primärfarben (R, V, B) angeordnet sind, wobei jedes Pixel auf einen der verschiedenen, am Bildschirm angebrachten Farbenfilter projiziert wird.

2. Vorrichtung nach Anspruch 1, dadurch gekennzeichnet, daß sie verschiedene Projektionsmodule (MP) enthält, die nebeneinander in Reihen und Spalten angeordnet sind, wobei die diesen verschiedenen Modulen entsprechenden Bilder auf den Bildschirm (E) projiziert werden und aneinandergesetzt werden, um ein einheitliches Bild zu gestalten.

3. Vorrichtung nach Anspruch 1, dadurch gekennzeichnet, daß der Bildschirm (E) aus einem lichtdurchlässigen Träger (10) besteht, dessen Rückseite (14) matt ist.

4. Vorrichtung nach Anspruch 1, dadurch gekennzeichnet, daß der Bildschirm (E) auf seiner Rückseite (14) einen schwarzen Trennraster (18) zwischen den Farbenfiltern (16) enthält.

5. Vorrichtung nach Anspruch 1, dadurch gekennzeichnet, daß die Flüssigkristallanzeige (A) von dem Typ mit Aktivmatrix ist.

6. Vorrichtung nach Anspruch 5, dadurch gekennzeichnet, daß die Aktivmatrix-Anzeige (A) vom Dünnschichttransistoren-Typ ist.

7. Vorrichtung nach Anspruch 1, dadurch gekennzeichnet, daß die Farbenfilter (16) des Bildschirms (E) im Dreieck (R, V, B) angeordnet sind und daß die Flüssigkristallanzeige (A) Pixel enthält, die ebenfalls im Dreieck angeordnet sind.

8. Vorrichtung nach Anspruch 1, dadurch gekennzeichnet, daß jeder Projektionsmodul (MP) vor der Lichtquelle (S) nacheinander einen Kondensor (C), eine Fresnel-Doppellinse (F), einen ersten Polarisator (P1), eine Projektionslinse (L') mit einer Objektbrennebene, in welcher die Flüssïgkristallanzeige (A) angeordnet ist, einen ersten Reflektionsspiegel (M1), einen zweiten Reflektionsspiegel (M2) und einen zweiten Polarisator (P2) enthält, wobei der Bildschirm (E) in der Bildebene der Projektionslinse (L') angeordnet ist.

9. Vorrichtung nach Anspruch 8, dadurch gekennzeichnet, daß der zweite Polarisator (P2) an der Rückseite (14) des Bildschirms (E) angebracht ist.

10. Vorrichtung nach Anspruch 1, dadurch gekennzeichnet, daß sie außerdem ein Steuerungsmittel (C) für die Intensität des von jedem Projektionsmodul (MP) projizierten Lichts enthält, und ein Mittel dafür, diese Intensität auf einen geeigneten Wert zu regeln.

## Claims

1. Giant display means incorporating a large screen (E) and at least one projection module (MP) using a liquid crystal display, said projection module (MP) comprising a white light source (S), a monochromatic liquid crystal display (A) placed between the source (S) and the rear face (14) of the screen (E) and optical means (L, C, F, P1, L') suitable for projecting the image of the display (A) onto the rear face (14) of the screen (E), each display being constituted by pixels, characterized in that the screen (E) is translucent and comprises a front face (12) directed towards the observer (O) and a rear face (14) incorporating a mosaic of colored filters (16) organized into trios of primary colors (R, V, B), each pixel being projected onto one of the various colored filters supported by the screen.

2. Means according to claim 1, characterized in that it comprises various projection modules (MP) juxtaposed in rows and columns, the images corresponding to said modules being projected onto screen (E) and juxtaposed for forming a single image.

3. Means according to claim 1, characterized in that the screen (E) is constituted by a transparent support (10), whose rear face (14) is matt.

4. Means according to claim 1, characterized in that, on its rear face (14), the screen (E) comprises a black grid or matrix (18) for separating the colored filters (16).

5. Means according to claim 1, characterized in that the liquid crystal display (A) is of the active matrix type.

6. Means according to claim 5, characterized in that the active matrix display (A) is of the thin film transistor type.

7. Means according to claim 1, characterized in that the colored filters (16) of screen (E) are distributed in the form of triangles (R, V, B) and the liquid crystal display (A) comprises pixels also organized in triangular form.

8. Means according to claim 1, characterized in that each projection module (MP) comprises, in front of the light source (S), successively a condenser (C), a double Fresnel lens (L), a first polarizer (P1), a projection lens (L') with an object focal plane in which is placed the liquid crystal display (A), a first reflecting mirror (M1), a second reflecting mirror (M2) and a second polarizer (P2), the screen (E) being placed in the image plane of the projection lens (L').

9. Means according to claim 8, characterized in that the second polarizer (P2) is placed against the rear face (14) of screen (E).

10. Means according to claim 1, characterized in that it also comprises a means (C) for checking the light intensity projected by each projection module (MP) and a means for controlling on return said intensity at an appropriate value.
